(19) Europäisches Patentamt
European Patent Office
Office européen des brevets

(11) **EP 1 801 406 A1**

(12) **EUROPEAN PATENT APPLICATION**
published in accordance with Art. 158(3) EPC

(43) Date of publication:
**27.06.2007 Bulletin 2007/26**

(51) Int Cl.:
*F02M 25/022* (2006.01)    *F02D 19/12* (2006.01)
*F02M 27/04* (2006.01)

(21) Application number: **05758067.2**

(22) Date of filing: **07.07.2005**

(86) International application number:
**PCT/JP2005/012591**

(87) International publication number:
**WO 2006/006500 (19.01.2006 Gazette 2006/03)**

(84) Designated Contracting States:
**DE FR**

(30) Priority: **09.07.2004 JP 2004229959**

(71) Applicants:
• **Fleeze Ind., Co., Ltd.**
**Kanagawa, 2520812 (JP)**
• **Kanto Senki Kogyo Kabushiki Kaisha**
**Yokohama-shi**
**Kanagawa 224-0054 (JP)**

(72) Inventors:
• **FUNAKOSHI, Toyomatsu**
**2520812 (JP)**
• **SUMIMOTO, Moriou**
**2340052 (JP)**

(74) Representative: **Selting, Günther**
**Von Kreisler Selting Werner**
**Deichmannhaus am Dom**
**Bahnhofsvorplatz 1**
**50667 Köln (DE)**

(54) **FUEL CONSUMPTION REDUCTION SYSTEM AND METHOD OF FUEL CONSUMPTION REDUCTION**

(57)    [PROBLEMS] To provide a fuel consumption reduction system capable of stable enhancement of mileage and a method of fuel consumption reduction.

[MEANS FOR SOLVING PROBLEMS] Water and an adulterant are put in an ionic active water tank to thereby obtain ionic active water, and steam from the ionic active water is fed to the vicinity of an inlet of an internal combustion engine. At that stage, heat from a radiator, muffler, etc. is applied to a steam generator for generation of the steam so as to, while accelerating the steam generation, regulate the rate of steam generated. Thus, steam can be fed in an appropriate rate to the internal combustion engine.

**FIG. 1**

EP 1 801 406 A1

**Description**

TECHNICAL FIELD

The present invention relates to a fuel consumption reduction system and method of fuel consumption reduction, and more particularly to a fuel consumption reduction system and method of fuel consumption reduction capable of improving the fuel economy of an internal combustion engine.

BACKGROUND ART

As an example of a method for improving the fuel economy (mileage) of an internal combustion engine (engine), a method of improving fuel quality in which a porous ceramic is placed in a fuel ionic active water tank has been proposed (for example, see reference 1).
A method for improving fuel quality and improving fuel economy by attaching a magnet to an oil supply pipe or the like that supplies fuel to an internal combustion engine, thereby to decompose fuel clusters has also been proposed (for example, see reference 2).
Reference 1: Japanese patent application publication No. 2004-035793
Reference 2: Japanese patent application publication No. 2004-144012

DISCLOSURE OF THE INVENTION

PROBLEMS TO BE SOLVED BY THE INVENTION

However, there are problems in these methods, such as a fuel economy improvement rate of less than 10% due to the unstable rate of fuel consumption reduction, significant increase in equipment costs, and obtaining no results of high efficiency.
In addition, a method for improving fuel based on the use of a catalyst such as platinum has also been proposed. However, because the use of a catalyst makes it difficult to maintain the cost, a demand exists for the development of a catalyst configured from a comparatively inexpensive raw substance.
In view of the above circumstances, it is an object of the present invention to provide a fuel consumption reduction system and method of fuel consumption reduction capable of stably improving fuel economy.

MEASURE TO SOLVE THE PROBLEMS

The fuel consumption reduction system of the present invention comprises an ionic active water, ionic active water tank in which the ionic active water is held, and steam supply means for supplying steam generated from the ionic active water to an intake port of an internal combustion engine.
The ionic active water tank may further comprise an ionic active substance, the ionic active water being produced by soaking the ionic active substance in water. The system may preferably comprise heating means for heating the ionic active water to accelerate the generation of steam.
The heating means may supply the heat of a muffler or a radiator to the ionic active water to accelerate the generation of steam.
The heating means may comprise a heating device to which an electric power is supplied to generate heat.
The fuel consumption reduction method of this embodiment is characterized by holding ionic active water in an ionic active water tank, and supplying steam generated from the ionic active water to an intake port of an internal combustion engine via a steam feed pipe.
In the method, an ionic active substance may be placed in the ionic active water tank, and the ionic active substance is soaked in water to produce ionic active water.
In the method, preferably the ionic active water is heated by heating means to accelerate the generation of steam.

EFFECT OF THE INVENTION

Using the present invention, the fuel economy of an internal combustion engine can be improved.

BRIEF DESCRIPTION OF THE DRAWINGS

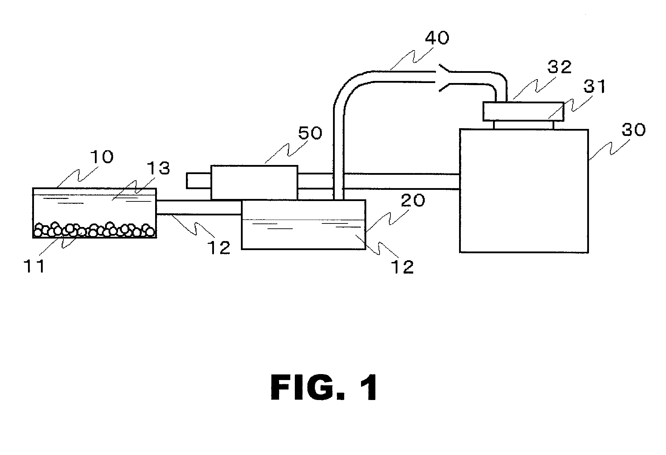

[FIG. 1] is a block diagram of one example of the configuration of the fuel consumption reduction system of the present invention.

EXPLANATION OF SYMBOLS

10 ... Ionic active water tank
11 ... Ionic active substance
12 ... Water feed pipe
13 ... Ionic active water
20 ... Steam generator
30 ... Internal combustion engine
31 ... Intake port
32 ... Air filter
40 ... Steam feed pipe
50 ... Heating device

BEST MODE FOR CARRYING OUT THE INVENTION

The best mode for carrying out the fuel consumption reduction system and method of fuel consumption reduction according to the present invention will be described hereinafter with reference to the attached drawings.

FIG. 1 is a block diagram of one example of the configuration of the fuel consumption reduction system of the present invention. Referring to FIG. 1, the fuel consumption reduction system shown comprises an ionic active water tank 10 in which ionic active water is produced by soaking an ionic active substance in water, a steam generator 20 for generating steam from the ionic active water, and a steam feed pipe 40 for leading the steam of the ionic active water to the vicinity of an air filter 32 of an intake port 31 through which air is led to a combustion chamber (not shown in the diagram) of an internal combustion engine 30.

An ionic active substance 11 for producing ionic active water is placed in the ionic active water tank 10 which is provided with a water feed pipe 12 for feeding ionic active water to the steam generator 20.

As the ionic active substance 11, substances that facilitate the formation of ionic active water from water including organic ceramics such as tourmaline, titanium oxide and rice bran ceramic, and mineral ceramics, can be employed, the ionic active substance being placed in the ionic active water tank in a weight ratio of the water and active substance of 10 - 30 : 1.

In addition, the active substance placed in the ionic active water tank is preferably selected in accordance with the fuel of the internal combustion engine. For example, tourmaline is employed as the active substance when the fuel in use is gasoline, and rice bran ceramic is employed as the active substance if the fuel in use is gas oil.

The ionic active water 13 is produced in the ionic active water tank 10 as a result of the soaking the ionic active substance 11 in water that has been poured though an inlet port not shown in the diagram, the produced ionic active water 13 being fed to the steam generator 20 via the feed water pipe 12.

The steam generator 20A is provided with a steam feed pipe 40 for feeding steam, and is placed in contact with the heating device 50.

As the heating device 50, any device, such as a radiator for cooling the internal combustion engine or a muffler through which exhaust gases generated by the internal combustion engine are discharged, capable of supplying heat to the steam generator 20 in an amount that accelerates the generation of steam may be employed. Also, a heating device that does not utilize the heat emitted from the internal combustion engine but instead creates a new heat such as a heating device that generates heat by supplying an electric power from a battery to a heating wire may be employed.

The steam generator 20 utilizes the heat from the heating device 50 to accelerate the generation of steam from the ionic active water 13.

In the fuel consumption reduction system of the present invention that employs the configuration described above, an ionic active water is produced in an ionic active water tank, the ionic active water is evaporated in a steam generator to form steam, and the steam is fed to the intake port of an internal combustion engine via a steam feed pipe.

The steam of the ionic active water that is fed to the vicinity of an intake port and, passing through an air filter, is introduced to the combustion chamber of the internal combustion engine, is thought to assist fuel combustion.

While, as described above, the ionic active water is produced by soaking an ionic active substance in water in an ionic active water tank, an ionic active water may be poured into the ionic active water tank and the steam generated from this ionic active water, or water produced as a result of reaction with an MgCa compound may be employed as the ionic active water.

The embodiments of the present invention will be hereinafter described in further detail.

EMBODIMENT 1

The fuel consumption reduction system of the present invention was mounted on a 1300cc gasoline engine vehicle, 10 liters of tap water to which no active substance had been added was introduced to the ionic active water tank and, while the steam of this tap water was being supplied to the internal combustion engine, the vehicle was driven along urban roads and the fuel consumption thereof was measured. Table 1 shows the measured results thereof.

EMBODIMENT 2

The fuel consumption reduction system of the present invention was mounted on a 1300cc gasoline engine vehicle, 10 liters of tap water to which no active substance had been added was introduced to the ionic active water tank and, while the steam of this tap water was being supplied to the internal combustion engine, the vehicle was driven for 2/3 of the process along an expressway and the fuel consumption thereof was measured. Table 1 shows the measured results thereof.

EMBODIMENT 3

The fuel consumption reduction system of the present invention was mounted on a 1300cc gasoline engine vehicle, 1kg of tourmaline (active substance) and 10 liters of tap water were introduced to the ionic active water tank and, while the steam of this ionic active water was being supplied to the internal combustion engine, the vehicle was driven along urban roads and the fuel consumption thereof was measured. Table 1 shows the measured results thereof.

EMBODIMENT 4

The fuel consumption reduction system of the present invention was mounted on a 1300cc gasoline engine vehicle, 1kg of tourmaline (active substance) and 10 liters of tap water were introduced to the ionic active water tank and, while the steam of this ionic active water was being supplied to the internal combustion engine, the vehicle was driven for 2/3 of the process along an expressway and the fuel consumption thereof was measured. Table 1 shows the measured results thereof.

[Table 1]

|  | Water type | Distance traveled (km) | Fuel consumption (liter) | Fuel economy (km/liter) |
|---|---|---|---|---|
| Embodiment 1 | Tap water | 340 | 35.58 | 9.8 |
| Embodiment 2 | Tap water | 409 | 30.24 | 13.52 |
| Embodiment 3 | Ionic active water | 459 | 36.15 | 12.69 |
| Embodiment 4 | Ionic active water | 420 | 21.5 | 19.53 |

It is apparent from the measured results of Table 1 that, based on a comparison of Embodiments 1 and 3 in which the vehicles were driven along urban roads and Embodiments 2 and 4 in which the vehicles were driven for 2/3 of the process along an expressway, fuel economy is improved as a result of the supply of steam of the ionic active water to the internal combustion engine.
In a comparison of Embodiments 1 and 3, the improvement is:

$$(12.59 - 9.8) \div 9.8 \text{ x } 100 \fallingdotseq 28\%$$

while in a comparison of Embodiments 2 and 4 the improvement is:

$$(19.53 - 13.52) \div 13.52 \text{ x } 100 \fallingdotseq 45\%$$

and,
even assuming a measurement error of 5%, the fuel consumption can be reduced by at least 20%.

EMBODIMENT 5

A 2-ton diesel engine vehicle on which the fuel consumption reduction system of the present invention was not mounted was driven and the fuel consumption thereof was measured. Table 2 shows the measured results thereof.

EMBODIMENT 6

The fuel consumption reduction system of the present invention was mounted on a vehicle with a 2-ton diesel engine vehicle, 1kg of rice bran ceramic (active substance) and 10 liters of tap water were introduced to the ionic active water tank and, while the steam of the ionic active water was being supplied to the internal combustion engine, the vehicle was driven and the fuel consumption thereof was measured. Table 2 shows the measured results thereof.

[Table 2]

| | | Distance traveled (km) | Fuel consumption (liter) | Fuel economy (km/liter) |
|---|---|---|---|---|
| Embodiment 5 | No system mounted | 351.2 | 38.8 | 9.1 |
| Embodiment 6 | System mounted | 292 | 25.4 | 11.5 |

It is apparent from the measured results of Table 2 that the fuel economy is improved as a result of the supply of steam of the ionic active water to the internal combustion engine.

In a comparison of Embodiments 5 and 6, the improvement is:

$$(11.5 - 9.1) \div 9.1 \text{ x } 100 \fallingdotseq 26\%$$

and,

even assuming a measurement error of 5%, the fuel consumption can be reduced by at least 20%.

In this way, the fuel consumption and the fuel economy of an internal combustion engine can be improved using the present invention.

In addition, because the fuel is thought to be completely combusted, the present invention is considered to significantly reduce the toxic components in the exhaust gases.

In addition, because the structure of the present invention is simple and does not use any chemicals or the like at all, it is advantageous from the viewpoint of both economics and a lowering of the burden on the environment.

**Claims**

1. A fuel consumption reduction system, comprising:

   ionic active water;
   an ionic active water tank that holds the ionic active water; and
   steam supply means for supplying steam generated from the ionic active water to an intake port of an internal combustion engine.

2. The fuel consumption reduction system according to claim 1, wherein the ionic active water tank is provided with an ionic active substance, and
   the ionic active water is produced by soaking the ionic active substance in water.

3. The fuel consumption reduction system according to any one of claims 1 and 2, further comprising heating means for heating the ionic active water to accelerate generation of steam.

4. The fuel consumption reduction system according to claim 3, wherein the heating means supplies heat of a muffler or radiator to the ionic active water to accelerate the generation of the steam.

5. The fuel consumption reduction system according to claim 3, wherein the heating means comprises a heating device that generates heat by an electric power supplying thereto.

6. A method of fuel consumption reduction, comprising:

holding ionic active water in an ionic active water tank; and
supplying steam generated from the ionic active water to an intake port of an internal combustion engine via a steam feed pipe.

7. The method of fuel consumption reduction according to claim 6, further comprising:

placing an ionic active substance in the ionic active water tank; and
soaking the ionic active substance in water, thereby to produce the ionic active water.

8. The method of fuel consumption reduction according to any one of claims 6 and 7, further comprising:

heating the ionic active water using heating means to accelerate generation of steam.

**FIG. 1**

## INTERNATIONAL SEARCH REPORT

| | International application No. |
| --- | --- |
| | PCT/JP2005/012591 |

**A. CLASSIFICATION OF SUBJECT MATTER**
*F02M25/022* (2006.01), *F02D19/12* (2006.01), *F02M27/04* (2006.01)

According to International Patent Classification (IPC) or to both national classification and IPC

**B. FIELDS SEARCHED**

Minimum documentation searched (classification system followed by classification symbols)
*F02M25/022* (2006.01), *F02D19/12* (2006.01), *F02M27/04* (2006.01)

Documentation searched other than minimum documentation to the extent that such documents are included in the fields searched
Jitsuyo Shinan Koho            1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 55-160151 A  (Nissan Motor Co., Ltd.),<br>12 December, 1980 (12.12.80),<br>Full text; all drawings<br>(Family: none) | 1-8 |
| Y | JP 3003172 U  (Kabushiki Kaisha Sankensha),<br>03 August, 1994 (03.08.94),<br>Full text; all drawings<br>(Family: none) | 1,2,6,7 |
| Y | JP 2002-70653 A  (Norio ARITA),<br>08 March, 2002 (08.03.02),<br>Full text; all drawings<br>(Family: none) | 3,4,8 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 October, 2005 (03.10.05) | 25 October, 2005 (25.10.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

# EP 1 801 406 A1

<table>
<tr><td colspan="2"><strong>INTERNATIONAL SEARCH REPORT</strong></td><td>International application No.<br>PCT/JP2005/012591</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-159660 A  (Nippon Soken, Inc.),<br>16 June, 1998 (16.06.98),<br>Full text; all drawings<br>(Family: none) | 5,8 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004035793 A

- JP 2004144012 A